# EUROPEAN PATENT SPECIFICATION

(11) **EP 3 196 991 B1**
(45) Date of publication and mention of the grant of the patent: **15.05.2019**
(21) Application number: 15838193.9
(22) Date of filing: 15.06.2015
(51) Int. Cl.: H01S 3/067, G02B 6/02, H01S 3/08

(54) **FIBER LASER DEVICE**
FASERLASERVORRICHTUNG
DISPOSITIF DE LASER À FIBRE

(30) Priority: 01.09.2014 JP 2014177455
(43) Date of publication of application: 26.07.2017
(73) Proprietor: Fujikura Ltd., Tokyo 135-8512 (JP)
(72) Inventor: KASHIWAGI, Masahiro, Sakura-shi Chiba 285-8550 (JP)
(74) Representative: Cabinet Plasseraud
(86) International application number: PCT/JP2015/067184
(87) International publication number: WO 2016/035414

(56) References cited:
- EP-A1- 2 642 620
- WO-A1-2013/001734
- JP-A- 2007 220 779
- JP-A- 2012 099 649
- JP-A- 2013 197 332
- US-A1- 2003 063 629
- US-A1- 2009 103 874
- BIAO SUN ET AL: "Low-threshold single-wavelength all-fiber laser generating cylindrical vector beams using a few-mode fiber Bragg grating", OPTICS LETTERS, OPTICAL SOCIETY OF AMERICA, vol. 37, no. 4, 15 February 2012 (2012-02-15), pages 464-466, XP001574099, ISSN: 0146-9592, DOI: 10.1364/OL.37.000464 [retrieved on 2012-02-06]

## Description

### Technical Field

The present invention relates to a fiber laser device that can emit light of excellent beam quality.

### Background Art

As one of fiber laser devices for use in processing machines, a resonator fiber laser device is known in which a pair of fiber bragg gratings (FBGs) is disposed sandwiching an amplification optical fiber.

Such a fiber laser device emits light in a wavelength range of visible light by converting light in a wavelength range of near infrared light into light in a short wavelength range using a wavelength conversion element. In converting the wavelength of light that is to be emitted, when the light has a large number of modes before the wavelength of the light is converted, a tendency is observed in which the wavelength of the light is inefficiently converted. Thus, light entered to the wavelength conversion element desirably includes only a fundamental-mode light beam and does not include higher-mode light beams to the extent possible. Even in the case in which the wavelength is unconverted, light of excellent condensing properties is requested for processing, for example. Thus, fiber laser devices that can emit light of excellent beam quality are sought.

On the other hand, with an increase in the output of fiber laser devices, it is necessary to propagate light having a larger power. Therefore, it is desired to use a multimode fiber for an optical fiber, such as an amplification optical fiber. The multimode fiber has a core diameter larger than the core diameter of a single-mode fiber. Even in the case in which the multimode fiber is used as described above, it is requested to emit light of excellent beam quality, which includes a fundamental-mode light beam and includes a fewer number of higher-mode light beams.

In order to achieve such a request, the present inventor proposed an amplification optical fiber and a fiber laser device using the same described in Patent Literature 1 below. One of the characteristics of this amplification optical fiber is that in a core region in which the intensity of an LP01 mode light beam is higher than at least one of the intensities of an LP02 mode light beam and an LP03 mode light beam, an active element is doped at a concentration higher than a concentration in the center part of the core. In the amplification optical fiber, the fundamental-mode light beam is more amplified than higher-mode light beams are. Accordingly, a fiber laser device using this amplification optical fiber can emit light of excellent beam quality. In a fiber laser using this amplification optical fiber, a resonator includes a pumping light source, an amplification optical fiber, an optical combiner, a double-clad fiber provided between the amplification optical fiber and the optical combiner, a first FBG provided at the double-clad fiber, a multi-mode fiber provided on the opposite side of the double-clad fiber of the amplification optical fiber, and a second FBG provided at the multi-mode fiber.

[Patent Literature 1] Japanese Patent No. 4667535 and EP 2 642 620 A1

### Summary of Invention

However, fiber laser devices that can emit light of excellent beam quality are requested with no use of the amplification optical fiber having an unevenly disposed region doped with an active element as described above.

Therefore, an object of the present invention is to provide a fiber laser device that can emit light of excellent beam quality.

To solve the problem, a fiber laser device of the present invention includes: a multimode amplification optical fiber having a core doped with an active element that emits light in a pumped state; a first FBG formed on a core of a multimode optical fiber disposed on a first side of the amplification optical fiber, the first FBG reflecting at least a part of light emitted from the active element; and a second FBG formed on a core of a multimode optical fiber disposed on a second side of the amplification optical fiber, the second FBG reflecting the light reflected off the first FBG at a reflectance lower than a reflectance of the first FBG, wherein: a wavelength of a fundamental-mode light beam reflected off the first FBG and a wavelength of a fundamental-mode light beam reflected off the second FBG are matched with each other; and wavelengths of higher-mode light beams reflected off the first FBG and wavelengths of higher-mode light beams reflected off the second FBG are unmatched with each other.

The fundamental-mode light beam travels straight along the longitudinal direction of the core. However, the higher-mode light beams are propagated obliquely to the longitudinal direction of the core while the higher-mode light beams are reflected off the side surface of the core. Thus, the fundamental-mode light beam and the higher-mode light beams are propagated through the inside of the core along the longitudinal direction at different propagation velocities. This means that the wavelength of the fundamental-mode light beam is different from the wavelengths of the higher-mode light beams. Here, in the fiber laser device above, the reflection wavelengths of the fundamental-mode light beams are matched with each other between the first FBG and the second FBG. Thus, the fundamental-mode light beam resonates between the first FBG and the second FBG, and is amplified by the stimulated emission of the active element in the amplification optical fiber. On the other hand, the reflection wavelengths of the higher-mode light beams are unmatched with each other between the first FBG and the second FBG. Thus, the resonance of the higher-mode light beams between the first FBG and the second FBG is reduced. Consequently, the amplification of the higher-mode light beams is reduced. As described above, the fundamental-mode light beam is emitted being amplified, whereas the amplification of the higher-mode light beams to be emitted is reduced. Accordingly, according to the fiber laser device of the present invention, the beam quality of light to be emitted can be made excellent.

In addition, in the fiber laser device of the present invention, the first FBG is formed of a plurality of high-refractive index portions at a predetermined interval, the high-refractive index portion having a refractive index higher than a refractive index of the core on which the first FBG is formed; the second FBG is formed of a plurality of high-refractive index portions at a predetermined interval, the high-refractive index portion having a refractive index higher than a refractive index of the core on which the second FBG is formed; and at the high-refractive index portion of at least one of the first FBG and the second FBG, a refractive index on a cross section perpendicular to a longitudinal direction of the core is ununiform.

Under the conditions in which the refractive indexes of the high-refractive index portions of the first FBG and the second FBG are uniform on the cross section perpendicular to the longitudinal direction of the core, when the reflection wavelengths of the fundamental-mode light beams are matched with each other between the first FBG and the second FBG, the reflection wavelengths of the higher-mode light beams are also matched with each other. The present inventor found that the refractive indexes of the high-refractive index portions forming the FBGs are ununiform on the cross section perpendicular to the core, allowing the reflection wavelength of the fundamental-mode light beam and the reflection wavelengths of the higher-mode light beams to be individually adjusted. Therefore, as described above, the refractive index of the high-refractive index portion of at least one of the first FBG and the second FBG is ununiform on the cross section. In this case, the reflection wavelengths of the fundamental-mode light beams are matched with each other between the first FBG and the second FBG. Thus, the reflection wavelengths of the higher-mode light beams can be unmatched with each other.

In this case, it is preferable that at the high-refractive index portion at which the refractive index is ununiform, a refractive index of a center region, which is in a predetermined range from a center on a cross section perpendicular to the longitudinal direction of the core, is higher than a refractive index of an outer circumferential region, which is an outer side of the center region.

The fundamental-mode light beam has the peak of the intensity located only in the center of the core, whereas the higher-mode light beams have the peak of the intensity located on the other sites in addition to the center of the core. Thus, the refractive index profile of the high-refractive index portion is configured as described above, and the reflection wavelengths of the fundamental-mode light beams are matched with each other between the first FBG and the second FBG. Thus, losses in the fundamental-mode light beam can be made smaller, light can be effectively resonated and amplified, and light of more excellent beam quality can be emitted.

Furthermore, in this case, the refractive index of the outer circumferential region may be equal to a refractive index of a core portion pinched between the high-refractive index portions in which the outer circumferential region is formed.

The refractive index of the outer circumferential region in the high-refractive index portion is equal to the refractive index of the portion other than the high-refractive index portion of the core. Thus, losses in the higher-mode light beams can be made much greater. Accordingly, light of more excellent beam quality can be emitted.

In addition, it is preferable that at the high-refractive index portions of the first FBG, a refractive index on a cross section perpendicular to the longitudinal direction of the core is uniform; and at the high-refractive index portions of the second FBG, a refractive index on a cross section perpendicular to the longitudinal direction of the core is ununiform.

The second FBG has a reflectance lower than the reflectance of the first FBG. Thus, the second FBG side is the emission side of light. Therefore, the refractive index profile of the high-refractive index portion of the first FBG is made uniform in the plane, and hence losses in the fundamental-mode light beam in the first FBG can be reduced.

As described above, according to the present invention, a fiber laser device that can emit light of excellent beam quality is provided.

### Brief Description of Drawings

FIG. 1 is a diagram of a fiber laser device according to an embodiment of the present invention.
FIG. 2 is a diagram of a cross section perpendicular to the longitudinal direction of an amplification optical fiber.
FIG. 3 is a diagram of a first optical fiber.
FIG. 4 is a diagram of a cross section passed through the high-refractive index portion of the first optical fiber.
FIG. 5 is a diagram of a second optical fiber.
FIG. 6 is a diagram of a cross section passed through the high-refractive index portion of the second optical fiber.

### Description of Embodiments

In the following, a preferred embodiment of a fiber laser device according to the present invention will be described in detail with reference to the drawings. Note that, for easy understanding, scales in the drawings are sometimes different from scales in the following description.

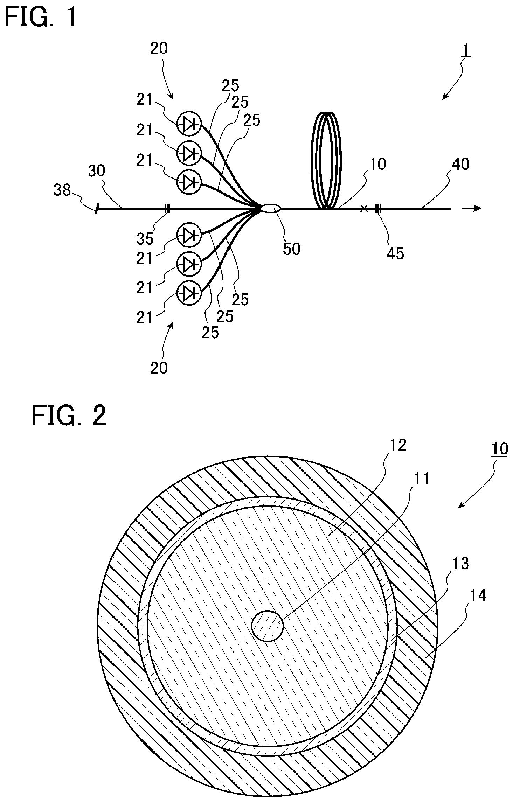

FIG. 1 is a diagram of a fiber laser device according to an embodiment of the present invention. As illustrated in FIG. 1, a fiber laser device 1 according to the embodiment includes an amplification optical fiber 10, a pumping source 20, a first optical fiber 30, a first FBG 35 provided on the first optical fiber 30, a second optical fiber 40, a second FBG 45 provided on the second optical fiber 40, and an optical combiner 50 as main configurations.

FIG. 2 is a cross sectional view of the cross-sectional structure of the amplification optical fiber 10 illustrated in FIG. 1. As illustrated in FIG. 2, the amplification optical fiber 10 includes a core 11, an inner cladding 12 surrounding the outer circumferential surface of the core 11 with no gap, an outer cladding 13 covering the outer circumferential surface of the inner cladding 12, and a buffer layer 14 covering the outer cladding 13 as main configurations. The amplification optical fiber 10 has a so-called double clad structure. The refractive index of the inner cladding 12 is lower than the refractive index of the core 11. The refractive index of the outer cladding 13 is lower than the refractive index of the inner cladding 12.

Thus, the core 11 is formed of silica doped with a dopant, such as germanium (Ge), which increases the refractive index, for example. In this case, the inner cladding 12 is formed of silica doped with no dopant, or formed of silica doped with a dopant, such as fluorine (F), which decreases the refractive index. The outer cladding 13 is formed of a resin or silica. For resins, ultraviolet curing resins are named, for example. For silica, silica is named, which is doped with a dopant, such as fluorine (F), which decreases the refractive index so that the refractive index is lower than the refractive index of the inner cladding 12, for example. A material configuring the buffer layer 14 includes an ultraviolet curing resin, for example. In the case in which the outer cladding 13 is made of a resin, this resin is an ultraviolet curing resin different from a resin configuring the outer cladding.

In addition to the dopant described above, the core 11 is doped with an active element, such as ytterbium (Yb), which is pumped by pumping light emitted from the pumping source 20. For such active elements, rare earth elements are named. In addition to ytterbium, rare earth elements include thulium (Tm), cerium (Ce), neodymium (Nd), europium (Eu), erbium (Er), and the like. Moreover, in addition to rare earth elements, active elements include bismuth (Bi) and the like.

The amplification optical fiber 10 is a multimode fiber, in which the fundamental-mode light beam as well as higher-mode light beams including a second-order LP mode light beam or higher are propagated through the core 11.

The pumping source 20 is configured of a plurality of laser diodes 21. In the embodiment, the laser diode 21 is a Fabry-Perot semiconductor laser having a GaAs semiconductor as a material, for example, which emits pumping light at a center wavelength of 915 nm. The laser diodes 21 of the pumping source 20 are individually connected to the optical fibers 25. Pumping light emitted from the laser diode 21 is propagated as multimode light, for example, through the optical fiber 25.

The optical fibers 25 are connected to one end of the amplification optical fiber 10 at the optical combiner 50. More specifically, the core of each of the optical fibers 25 is connected to the inner cladding 12 of the amplification optical fiber 10 so that the core of each of the optical fibers 25 is optically coupled to the inner cladding 12 of the amplification optical fiber 10. Thus, the pumping light emitted from each of the laser diodes 21 is entered to the inner cladding 12 of the amplification optical fiber 10 through the optical fibers 25, and mainly propagated through the inner cladding 12.

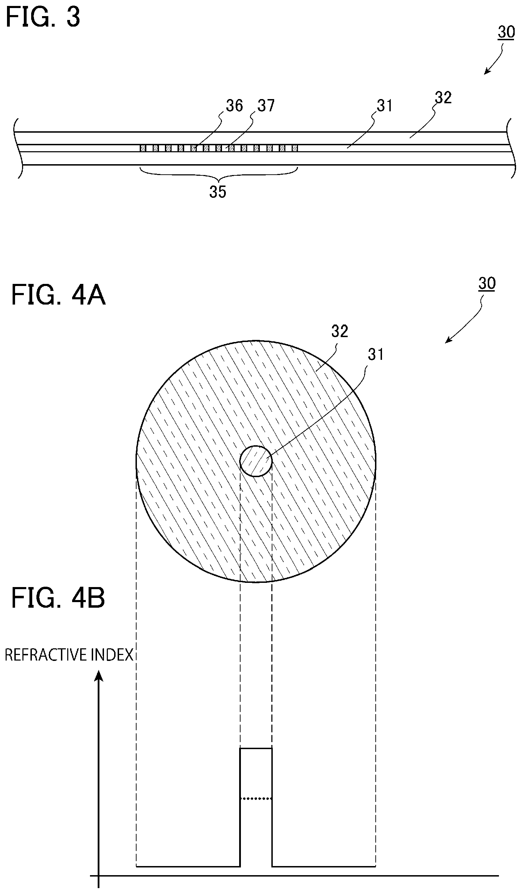

FIG. 3 is a diagram of the first optical fiber 30. The first optical fiber 30 includes a core 31 doped with no active element and a cladding 32 surrounding the outer circumferential surface of the core 31 with no gap as main configurations. The first optical fiber 30 is connected to one end of the amplification optical fiber 10 together with the optical fibers 25 at the optical combiner 50. More specifically, the core 11 of the amplification optical fiber 10 is connected to the core 31 of the first optical fiber 30 so that the core 31 of the first optical fiber 30 is optically coupled to the core 11 of the amplification optical fiber 10. The first optical fiber 30 is a multimode fiber, which propagates light similarly to the core 11 of the amplification optical fiber 10 propagating light. Thus, the multimode light propagated through the core 11 of the amplification optical fiber 10 is propagated through the core 31 of the first optical fiber 30 as multimode light, which is unconverted.

The first FBG 35 is provided on the core 31 of the first optical fiber 30. Thus, the first FBG 35 is disposed on a first side of the amplification optical fiber 10, and optically coupled to the core 11 of the amplification optical fiber 10. The first FBG 35 includes a high-refractive index portion 36 having a refractive index higher than the high-refractive indexes of the portions other than the first FBG 35 of the core 31 and a low-refractive index portion 37 having a refractive index similar to the refractive indexes of the portions other than the first FBG 35 of the core 31. The high-refractive index portion 36 and the low-refractive index portion 37 are periodically repeated along the longitudinal direction of the core 31. Thus, the core portion, which is the low-refractive index portion 37, is pinched between the high-refractive index portions 36. The first FBG 35 is configured to reflect light at a wavelength, which is at least a part of the wavelength of light emitted from the pumped active element of the amplification optical fiber 10. The reflectance of the first FBG 35 is higher than the reflectance of the second FBG 45, described later, and reflects light at a desired wavelength in the light emitted from the active element at 99% or more, for example.

FIG. 4 is a diagram of a cross section of the first optical fiber 30 passed through the high-refractive index portion 36 of the first optical fiber 30 and perpendicular to the longitudinal direction of the first optical fiber 30. More specifically, FIG. 4A illustrates the configuration of the first optical fiber 30 on the cross section, and FIG. 4B illustrates the refractive index profile of the first optical fiber 30 on the cross section. As illustrated in FIG. 4, the refractive index profile of the core 31 in the radial direction is uniform in the high-refractive index portion 36 of the first FBG 35. Typically, the high-refractive index portion of the FBG is formed by applying light, such as ultraviolet rays, to the portion to be the high-refractive index portion. Thus, the core 31 is doped with a photosensitive element, such as germanium, having properties in which the refractive index is changed by the application of light. Light, such as ultraviolet rays, is applied from the side-surface side of the first optical fiber 30 to the portion to be the high-refractive index portion 36, and the element in the portion reacts to the light. Thus, the high-refractive index portion 36 is formed. As described above, the high-refractive index portion 36 has a uniform refractive index in the radial direction of the core 31. Thus, the core 31 of the first optical fiber 30 is doped with a photosensitive element at a fixed concentration. Note that, in FIG. 4B, the refractive index of the low-refractive index portion 37 is expressed by a dotted line.

In light propagated through the core, the fundamental-mode light beam travels straight along the longitudinal direction of the core. However, the higher-mode light beams are propagated obliquely to the longitudinal direction of the core while the higher-mode light beams are reflected off the side surface of the core. Thus, the fundamental-mode light beam and the higher-mode light beams are propagated through the core along the longitudinal direction at different propagation velocities. This means that the wavelength of the fundamental-mode light beam is different from the wavelengths of the higher-mode light beams.

Therefore, in the embodiment, in the first FBG 35, for example, the reflection wavelength of the fundamental-mode light beam is a wavelength of 1,063.7 nm. The reflection wavelength of a second-order LP mode light beam is a wavelength of 1,062.6 nm. The reflection wavelength of a third-order LP mode light beam is a wavelength of 1,061.0 nm. The reflection wavelength of is a fourth-order LP mode light beam a wavelength of 1060.9 nm.

Note that, at the end of the first optical fiber 30 on the opposite side of the end to be connected to the amplification optical fiber 10, a terminal unit 38 that converts light into heat is provided.

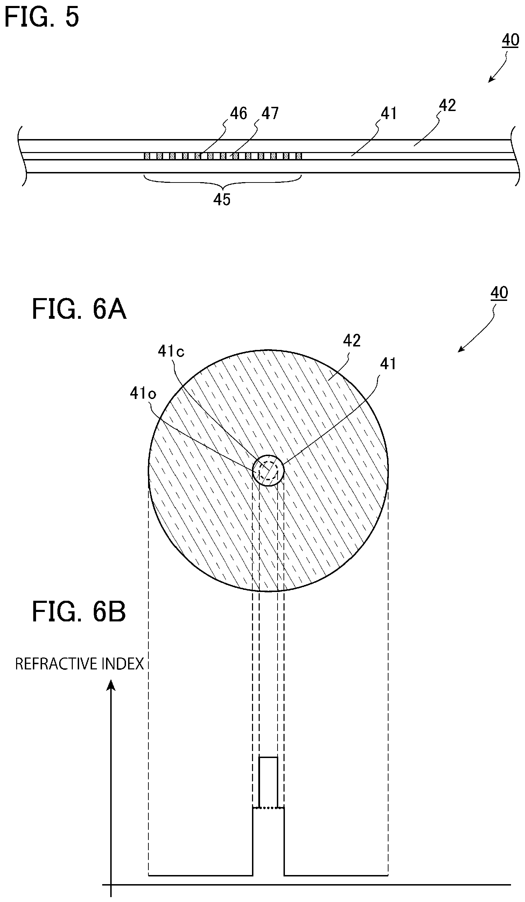

FIG. 5 is a diagram of the second optical fiber 40. The second optical fiber 40 includes a core 41 doped with no active element and a cladding 42 surrounding the outer circumferential surface of the core 41 with no gap as main configurations. The second optical fiber 40 is a multimode fiber similar to the first optical fiber 30, and propagates light similar to the light propagated through the core 11 of the amplification optical fiber 10. The second optical fiber 40 is connected so that the core 11 of the amplification optical fiber 10 is optically coupled to the core 41 of the second optical fiber 40 at the other end of the amplification optical fiber 10. Thus, the multimode light propagated through the core 11 of the amplification optical fiber 10 is propagated through the core 41 of the second optical fiber 40 as multimode light, which is unconverted.

The second FBG 45 is provided on the core 41 of the second optical fiber 40. As described above, the second FBG 45 is disposed on a second side of the amplification optical fiber 10, and optically coupled to the core 11 of the amplification optical fiber 10. The second FBG 45 includes a high-refractive index portion 46 having a refractive index higher than the refractive indexes of the portions other than the second FBG 45 of the core 41 and a low-refractive index portion 47 having a refractive index similar to the refractive indexes of the portions other than the second FBG 45 of the core 41. The high-refractive index portion 46 and the low-refractive index portion 47 are periodically repeated along the longitudinal direction of the core 41. Thus, the core portion, which is the low-refractive index portion 47, is pinched between the high-refractive index portions 46. The second FBG 45 is configured to reflect a part of the light reflected off the first FBG 35 at a reflectance lower than the reflectance of the first FBG 35. In the case in which light reflected off the first FBG 35 is entered, the second FBG 45 reflects the light at a reflectance of about 10%, for example. As described above, the first FBG 35, the amplification optical fiber 10, and the second FBG 45 form a resonator.

FIG. 6 is a diagram of a cross section of the second optical fiber 40 passed through the high-refractive index portion 46 of the second optical fiber 40 and perpendicular to the longitudinal direction of the second optical fiber 40. More specifically, FIG. 6A illustrates the configuration of the second optical fiber 40 on the cross section. FIG. 6B illustrates the refractive index profile of the second optical fiber 40 on the cross section. As illustrated in FIG. 6A, the core 41 of the second optical fiber 40 includes a center region 41c including the center of the core 41 and an outer circumferential region 41o surrounding the center region 41c and including the outermost circumferential portion of the core 41. Although not illustrated in the drawing specifically, the refractive indexes of the center region 41c and the outer circumferential region 41o are both higher than the refractive index of the cladding 42. In the embodiment, the refractive index of the center region 41c is equal to the refractive index of the outer circumferential region 41o, except the refractive index of the high-refractive index portion 46 of the second FBG 45. However, the refractive index of the center region 41c may be higher than the refractive index of the outer circumferential region 41o. Alternatively, the refractive index of the center region 41c may be lower than the refractive index of the outer circumferential region 41o.

As illustrated in FIG. 6B, in the high-refractive index portion 46 of the second FBG 45, the refractive index is ununiform on the cross section perpendicular to the longitudinal direction of the core 41. In the embodiment, the refractive index of the center region 41c is higher than the refractive index of the outer circumferential region 41o. Note that, similarly to FIG. 4B showing the refractive index of the low-refractive index portion 37, in FIG. 6B, the refractive index of the low-refractive index portion 47 is expressed by a dotted line. It can be understood from FIG. 6B that the refractive index of the outer circumferential region 41o in the high-refractive index portion 46 of the embodiment is equal to the refractive index of the low-refractive index portion 47. However, the refractive index of the outer circumferential region 41o may be higher than the refractive index of the low-refractive index portion 47. In order to obtain the refractive index profile of the high-refractive index portion 46 as described above, a method below only has to be used. In other words, the center region 41c of the core 41 is doped with an element of high photosensitivity, such as germanium, and the outer circumferential region 41o of the core 41 is doped with an element of low photosensitivity, such as phosphorus and aluminum exhibiting no photosensitivity. Light, such as ultraviolet rays, is applied from the side-surface side of the second optical fiber 40 to the portion to be the high-refractive index portion 46, and the element in the portion reacts to the light. Thus, the high-refractive index portion 46 can be obtained, in which the refractive index of the center region 41c is higher than the refractive index of the outer circumferential region 41o illustrated in FIG. 6B.

In the second FBG 45 having the high-refractive index portion 46 with the refractive index profile as described above, the reflection wavelength of the fundamental-mode light beam is matched with the reflection wavelength of the fundamental-mode light beam of the first FBG 35, and the reflection wavelengths of the higher-mode light beams are unmatched with the reflection wavelengths of the higher-mode light beams of the first FBG 35. Therefore, in the embodiment, the reflection wavelength of the fundamental-mode light beam in the second FBG 45 is a wavelength of 1,063.7 nm. The reflection wavelength of the second-order LP mode light beam is a wavelength of 1,062.0 nm. The reflection wavelength of the third-order LP mode light beam is a wavelength of 1,061.8 nm. The reflection wavelength of is the fourth-order LP mode light beam a wavelength of 1,061.4 nm.

Unlike the embodiment, under the conditions in which the refractive index of the high-refractive index portion 46 of the second FBG 45 is constant in the radial direction of the core 41 like the high-refractive index portion 36 of the first FBG 35, when the reflection wavelength of the fundamental-mode light beam in the second FBG 45 is matched with the reflection wavelength of the fundamental-mode light beam in the first FBG 35, the reflection wavelengths of the higher-mode light beams in the second FBG 45 are also matched with the reflection wavelengths of the higher-mode light beams in the first FBG 35. However, in the embodiment, the refractive index of the high-refractive index portion 46 of the second FBG 45 is ununiform in the radial direction of the core 41. Thus, in the second FBG 45, although the reflection wavelength of the fundamental-mode light beam is matched with the reflection wavelength of the fundamental-mode light beam in the first FBG 35 as described above, the reflection wavelengths of the higher-mode light beams are unmatched with the reflection wavelengths of the higher-mode light beams in the first FBG 35.

The fundamental-mode light beam has the peak of the intensity located in the center of the core. The higher-mode light beams also have the peak of the intensity located on the other sites in addition to the center of the core. Thus, the refractive index profile of the high-refractive index portion 46 of the second FBG 45 is configured as described above, and hence losses in the fundamental-mode light beam in the second FBG 45 can be made smaller than losses in the higher-mode light beams. More specifically in the embodiment, as described above, the refractive index of the outer circumferential region 41o is equal to the refractive index of the low-refractive index portion 47. Thus, in the second FBG 45, losses in the higher-mode light beams can be made greater than losses in the fundamental-mode light beam, compared with the case in which the refractive index of the outer circumferential region 41o is different from the refractive index of the low-refractive index portion 47.

Next, the optical operation of the fiber laser device 1 will be described.

First, pumping light is emitted from the laser diodes 21 of the pumping source 20. This pumping light is entered to the inner cladding 12 of the amplification optical fiber 10 through the optical fiber 25, and mainly propagated through the inner cladding 12. The pumping light propagated through the inner cladding 12 pumps the active element doped in the core 11 when the pumping light is passed through the core 11. The pumped active element emits spontaneous emission light in a specific wavelength range. As the spontaneous emission light is the starting point, light at a wavelength reflected off both of the first FBG 35 and the second FBG 45 resonates between the first FBG 35 and the second FBG 45. When the resonating light is propagated through the core 11 of the amplification optical fiber 10, the pumped active element causes stimulated emission, and the resonating light is amplified. A part of the resonating light is transmitted through the second FBG 45, and emitted from the second optical fiber 40. After the gain is equal to the loss in the resonator including the first FBG 35, the amplification optical fiber 10, and the second FBG 45, the state is turned into a laser oscillation state, and light having a certain power is emitted from the second optical fiber 40.

To the first FBG 35, higher-mode light beams that are the second LP mode light beam or more are entered in addition to the fundamental-mode light beam. When the reflection wavelengths of the fundamental-mode light beam and the higher-mode light beams of the first FBG 35 are as described above, in the first FBG 35, the fundamental-mode light beam at a center wavelength of 1,063.7 nm, the second-order LP mode light beam at a center wavelength of 1,062.6 nm, the third-order LP mode light beam at a center wavelength of 1,061.0 nm, and the fourth-order LP mode light beam at a center wavelength of 1060.9 nm are reflected off the first FBG 35. On the other hand, as described above, when the reflection wavelengths of the fundamental-mode light beam and the higher-mode light beams of the second FBG 45 are described above, in the second FBG 45, the fundamental-mode light beam at a center wavelength of 1,063.7 nm, the second-order LP mode light beam at a center wavelength of 1,062.0 nm, the third-order LP mode light beam at a center wavelength of 1,061.8 nm, and the fourth-order LP mode light beam at a center wavelength of 1,061.4 nm are reflected off the second FBG 45. Thus, in the second FBG 45, although the reflection wavelength of the fundamental-mode light beam is matched with the reflection wavelength of the fundamental-mode light beam of the first FBG 35, the reflection wavelengths of the higher-mode light beams are unmatched with the reflection wavelengths of the higher-mode light beams of the first FBG 35. Consequently, in the light reflected off the first FBG 35 and entered to the second FBG 45, the fundamental-mode light beam is reflected off the second FBG 45 at a reflectance lower than the reflectance of the first FBG 35. However, in the light reflected off the first FBG 35 and entered to the second FBG 45, the reflection of the higher-mode light beams is reduced in the second FBG 45, and transmitted through the second FBG 45.

As described above, the resonating light that is reflected off both of the first FBG 35 and the second FBG 45 is mainly the fundamental-mode light beam. Thus, in the amplification optical fiber 10, the fundamental-mode light beam is mainly amplified. Consequently, the fundamental-mode light beam is mainly emitted from the second optical fiber 40.

Note that, most of the light transmitted from the amplification optical fiber 10 side through the first FBG 35 is converted into heat at the terminal unit 38 and vanished.

As described above, according to the fiber laser device of the embodiment, the reflection wavelengths of the fundamental-mode light beams are matched with each other between the first FBG 35 and the second FBG 45. On the other hand, the reflection wavelengths of the higher-mode light beams are unmatched with each other between the first FBG and the second FBG. Thus, the amplification of the higher-mode light beams is reduced, and the fundamental-mode light beam is emitted being amplified. Consequently, according to the fiber laser device 1 of the present invention, the beam quality of light to be emitted can be made excellent.

In the embodiment, the refractive index of the high-refractive index portion 36 of the first FBG 35 is constant in the radial direction of the core 31, whereas the refractive index of the high-refractive index portion 46 of the second FBG 45, which is the FBG on the light emission side, is ununiform in the radial direction of the core 41. Thus, losses in light on the first FBG 35 side are reduced, and hence the reflection wavelengths of the higher-mode light beams can be unmatched with each other between the first FBG 35 and the second FBG 45.

As described above, the present invention is described as the embodiment is taken as an example. However, the present invention is not limited to the embodiment. The fiber laser device according to the present invention can be appropriately modified as long as the wavelength of the fundamental-mode light beam reflected off the first FBG 35 and the wavelength of the fundamental-mode light beam reflected off the second FBG 45 are matched with each other, and the wavelengths of the higher-mode light beams reflected off the first FBG 35 and the wavelengths of the higher-mode light beams reflected off the second FBG 45 are unmatched with each other.

For example, in the foregoing embodiment, the refractive index of the high-refractive index portion 36 of the first FBG 35 is uniform on the cross section perpendicular to the longitudinal direction of the core 31, whereas the refractive index of the high-refractive index portion 46 of the second FBG 45 is ununiform on the cross section perpendicular to the longitudinal direction of the core 41. However, the refractive index of the high-refractive index portion 36 of the first FBG 35 may be ununiform on the cross section perpendicular to the longitudinal direction of the core 31. In this case, the refractive index profile of the high-refractive index portion 36 may have a configuration in which the refractive index of the center region, which is in a predetermined range from the center on the cross section perpendicular to the longitudinal direction of the core 31, is higher than the refractive index of the outer circumferential region, which is the outer side of the center region, like the refractive index profile of the high-refractive index portion 46. In this case, the refractive index of the outer circumferential region of the high-refractive index portion 36 may be equal to the refractive index of the low-refractive index portion 37 of the first FBG 35. In the case in which the refractive index of the high-refractive index portion 36 of the first FBG 35 is ununiform on the cross section perpendicular to the longitudinal direction of the core 31 as described above, the refractive index of the high-refractive index portion 46 of the second FBG 45 may be uniform on the cross section perpendicular to the longitudinal direction of the core 41. Even in this case, the optical reflectance of the second FBG 45 is lower than the optical reflectance of the first FBG 35. However, from the viewpoint of efficiently emitting light with losses in light being reduced, preferably, the refractive index of the high-refractive index portion 36 of the first FBG 35 is uniform on the cross section perpendicular to the longitudinal direction of the core 31, and the first FBG 35 has a reflectance like the reflectance of the foregoing embodiment.

In the foregoing embodiment, the refractive index of the center region 41c of the high-refractive index portion 46 of the second FBG 45 is higher than the refractive index of the outer circumferential region 41o, and the refractive index of the outer circumferential region 41o is equal to the refractive index of the low-refractive index portion 47. However, in the case in which the refractive index of the high-refractive index portion 46 of the second FBG 45 is ununiform on the cross section perpendicular to the longitudinal direction of the core 41, the refractive index profile of the high-refractive index portion 46 of the second FBG 45 may be different from the refractive index profile of the foregoing embodiment. For example, the refractive index of the outer circumferential region 41o may be a refractive index in a range of the refractive index of the center region 41c to the refractive index of the low-refractive index portion 47. The refractive index of the high-refractive index portion 46 may have a configuration in which the refractive index is highest in the center of the core 41 and gradually lower to the outer circumferential side of the core 41. The portion of the high-refractive index portion 46 with the highest refractive index is not necessarily located in the center of the core 41. Such an exemplary modification of the refractive index profile of the high-refractive index portion 46 is also applicable to the case in which the high-refractive index portion 36 of the first FBG 35 is ununiform on the cross section perpendicular to the longitudinal direction of the core 31.

The location at which pumping light is entered to the amplification optical fiber 10 is not limited specifically. The core 31 of the first optical fiber 30 and the core 41 of the second optical fiber 40 may be doped with an active element.

As described above, according to the present invention, the fiber laser device that can emit light of excellent beam quality is provided, the use of which is expected in fiber laser devices used for processing and other purposes.

### Reference Signs List

- 1: fiber laser device
- 10: amplification optical fiber
- 11: core
- 12: inner cladding
- 13: outer cladding
- 20: pumping source
- 30: first optical fiber
- 31: core
- 35: first FBG
- 36: high-refractive index portion
- 37: low-refractive index portion
- 40: second optical fiber
- 41: core
- 41c: center region
- 41o: outer circumferential region
- 45: second FBG
- 46: high-refractive index portion
- 47: low-refractive index portion

## Claims

1. A fiber laser device (1) comprising:
a multimode amplification optical fiber (10) having a core (11) doped with an active element that emits light in a pumped state;
a first fiber Bragg grating, FBG, (35) formed on a core (31) of a multimode optical fiber (30) disposed on a first side of the amplification optical fiber, the first FBG (35) being formed of a plurality of high-refractive index portions (36) at a predetermined interval, the high-refractive index portion (36) having a refractive index higher than a refractive index of the core (31) on which the first FBG (35) is formed, the first FBG (35) reflecting at least a part of light emitted from the active element; and
a second fiber Bragg grating, FBG, (45) formed on a core (41) of a multimode optical fiber (40) disposed on a second side of the amplification optical fiber, the second FBG (45) being formed of a plurality of high-refractive index portions (46) at a predetermined interval, the high-refractive index portion (46) having a refractive index higher than a refractive index of the core (41) on which the second FBG is formed, the second FBG (45) reflecting the light reflected off the first FBG at a reflectance lower than a reflectance of the first FBG, wherein:
a wavelength of a fundamental-mode light beam reflected off the first FBG and a wavelength of a fundamental-mode light beam reflected off the second FBG are matched with each other; and
at the high-refractive index portion of at least one of the first FBG and the second FBG, a refractive index of the core is ununiform on a cross section perpendicular to a longitudinal direction, such that wavelengths of higher-mode light beams reflected off the first FBG and wavelengths of higher-mode light beams reflected off the second FBG are unmatched with each other.

2. The fiber laser device (1) according to claim 1, wherein
at the high-refractive index portion (46) at which the refractive index is ununiform, a refractive index of a center region (41c), which is in a predetermined range from a center on a cross section perpendicular to the longitudinal direction of the core (41), is higher than a refractive index of an outer circumferential region, which is an outer side of the center region.

3. The fiber laser device (1) according to claim 2, wherein
the refractive index of the outer circumferential region (41o) is equal to a refractive index of a core portion (41) pinched between the high-refractive index portions (46) in which the outer circumferential region (41o) is formed.

4. The fiber laser device (1) according to any one of claims 1 to 3, wherein:
at the high-refractive index portions (36) of the first FBG, a refractive index on a cross section perpendicular to the longitudinal direction of the core (31) is uniform; and
at the high-refractive index portions (46) of the second FBG, a refractive index on a cross section perpendicular to the longitudinal direction of the core (41) is ununiform.

## Patentansprüche

1. Faserlaservorrichtung (1) mit:
einer optischen Multimode-Verstärkungsfaser (10) mit einem Kern (11), der mit einem aktiven Element dotiert ist, das in einem gepumpten Zustand Licht emittiert;
einem ersten Faser-Bragg-Gitter, FBG, (35), das auf einem Kern (31) einer optischen Multimode-Faser (30) ausgebildet ist, die auf einer ersten Seite der optischen Verstärkungsfaser angeordnet ist, wobei das erste FBG (35) aus mehreren Abschnitten (36) mit hohem Brechungsindex in einem vorgegebenen Intervall ausgebildet ist, wobei der Abschnitt (36) mit hohem Brechungsindex einen Brechungsindex aufweist, der höher ist als der Brechungsindex des Kerns (31), auf dem das erste FBG (35) ausgebildet ist, wobei das erste FBG (35) mindestens ein Teil des vom aktiven Element emittierten Lichts reflektiert; und
einem zweiten Faser-Bragg-Gitter, FBG, (45), das auf einem Kern (41) einer optischen Multimode-Faser (40) ausgebildet ist, die auf einer zweiten Seite der optischen Verstärkungsfaser angeordnet ist, wobei das zweite FBG (45) aus mehreren Abschnitten (46) mit hohem Brechungsindex in einem vorgegebenen Intervall ausgebildet ist, wobei der Abschnitt (36) mit hohem Brechungsindex einen Brechungsindex aufweist, der höher ist als der Brechungsindex des Kerns (41), auf dem das zweite FBG (35) ausgebildet ist, wobei das zweite FBG (45) das vom ersten FBG reflektierte Licht mit einem Reflexionsgrad reflektiert, der niedriger ist als ein Reflexionsgrad des ersten FBG, wobei:
eine Wellenlänge eines Grundmoden-Lichtstrahls, der vom ersten FBG reflektiert wird, und eine Wellenlänge eines Grundmoden-Lichtstrahls, der vom zweiten FBG reflektiert wird, aneinander angepasst sind; und
am Abschnitt mit hohem Brechungsindex des ersten FBG und/oder des zweiten FBG ein Brechungsindex des Kerns auf einem Querschnitt senkrecht zu einer Längsrichtung uneinheitlich ist, so dass Wellenlängen von Lichtstrahlen höherer Moden, die vom ersten FBG reflektiert werden, und Wellenlängen von Lichtstrahlen höherer Moden, die vom zweiten FBG reflektiert werden, nicht aneinander angepasst sind.

2. Faserlaservorrichtung (1) nach Anspruch 1, wobei
an dem Abschnitt (46) mit hohem Brechungsindex, an dem der Brechungsindex uneinheitlich ist, ein Brechungsindex eines Mittenbereichs (41c), der sich in einem vorgegebenen Bereich von einer Mitte auf einem Querschnitt senkrecht zur Längsrichtung des Kerns (41) befindet, höher ist als ein Brechungsindex eines Außenumfangsbereichs, der eine Außenseite des Mittenbereichs bildet.

3. Faserlaservorrichtung (1) nach Anspruch 2, wobei
der Brechungsindex des Außenumfangsbereichs (41o) einem Brechungsindex eines Kernabschnitts (41) gleicht, der zwischen den Abschnitten (46) mit hohem Brechungsindex, in denen der Außenumfangsbereich (410) ausgebildet ist, eingeklemmt ist.

4. Faserlaservorrichtung (1) nach einem der Ansprüche 1 bis 3, wobei:
an den Abschnitten (36) mit hohem Brechungsindex des ersten FBG ein Brechungsindex auf einem Querschnitt senkrecht zur Längsrichtung des Kerns (31) einheitlich ist, und
an den Abschnitten (46) mit hohem Brechungsindex des zweiten FBG ein Brechungsindex auf einem Querschnitt senkrecht zur Längsrichtung des Kerns (41) uneinheitlich ist.

## Revendications

1. Dispositif laser à fibre (1) comprenant :
une fibre optique à amplification multimode (10) ayant une âme (11) dopée avec un élément actif qui émet une lumière dans un état pompé ;
un premier réseau de Bragg sur fibre, FBG, (35) formé sur une âme (31) d'une fibre optique multimode (30) disposée sur un premier côté de la fibre optique à amplification, le premier FBG (35) étant formé d'une pluralité de parties à indice de réfraction élevé (36) à un intervalle prédéterminé, la partie à indice de réfraction élevé (36) ayant un indice de réfraction supérieur à un indice de réfraction de l'âme (31) sur laquelle le premier FBG (35) est formé, le premier FBG (35) réfléchissant au moins une partie de la lumière émise par l'élément actif ; et
un second réseau de Bragg sur fibre, FBG, (45) formé sur une âme (41) d'une fibre optique multimode (40) disposée sur un second côté de la fibre optique à amplification, le second FBG (45) étant formé d'une pluralité de parties à indice de réfraction élevé (46) à un intervalle prédéterminé, la partie à indice de réfraction élevé (46) ayant un indice de réfraction supérieur à un indice de réfraction de l'âme (41) sur laquelle le second FBG est formé, le second FBG (45) réfléchissant la lumière réfléchie par le premier FBG à un facteur de réflexion inférieur à un facteur de réflexion du premier FBG, dans lequel :
une longueur d'onde d'un faisceau lumineux en mode fondamentale réfléchi par le premier FBG et une longueur d'onde d'un faisceau lumineux en mode fondamental réfléchi par le second FBG sont mises en correspondance l'une avec l'autre ; et
au niveau de la partie à indice de réfraction élevé d'au moins l'un parmi le premier FBG et le second FBG, un indice de réfraction de l'âme est non uniforme sur une section transversale perpendiculaire à une direction longitudinale de sorte que des longueurs d'onde de faisceaux lumineux en mode supérieur réfléchis par le premier FBG et les longueurs d'onde de faisceaux lumineux en mode supérieur réfléchis par le second FBG sont différentes les unes des autres.

2. Dispositif laser à fibre (1) selon la revendication 1, dans lequel au niveau de la partie à indice de réfraction élevé (46) où l'indice de réfraction est non uniforme, un indice de réfraction d'une région centrale (41c), qui est dans une plage prédéterminée par rapport à un centre sur une section transversale perpendiculaire à la direction longitudinale de l'âme (41), est supérieur à un indice de réfraction de la région circonférentielle externe, qui est un côté externe de la région centrale.

3. Dispositif laser à fibre (1) selon la revendication 2, dans lequel l'indice de réfraction de la région circonférentielle externe (41o) est égal à un indice de réfraction d'une partie d'âme (41) pincée entre les parties à indice de réfraction élevé (46) dans lesquelles la région circonférentielle externe (41o) est formée.

4. Dispositif laser à fibre (1) selon l'une quelconque des revendications 1 à 3, dans lequel :
au niveau des parties à indice de réfraction élevé (36) du premier FBG, un indice de réfraction sur une section transversale perpendiculaire à la direction longitudinale de l'âme (31) est uniforme ; et
au niveau des parties à indice de réfraction élevé (46) du second FBG, un indice de réfraction sur une section transversale perpendiculaire à la direction longitudinale de l'âme (41) est non uniforme.
